# EUROPÄISCHE PATENTSCHRIFT

(11) **EP 2 347 466 B1**
(45) Veröffentlichungstag und Bekanntmachung des Hinweises auf die Patenterteilung: **31.07.2013**
(21) Anmeldenummer: 09744983.9
(22) Anmeldetag: 30.09.2009
(51) Int. Cl.: H01M 10/50

(54) **ENERGIESPEICHEREINHEIT**
ENERGY STORAGE UNIT
UNITÉ D'ACCUMULATION D'ÉNERGIE

(30) Priorität: 30.09.2008 US 101507 P; 18.09.2009 WO PCT/EP2009/062151; 18.09.2009 WO PCT/EP2009/062152; 18.09.2009 WO PCT/EP2009/062153
(43) Veröffentlichungstag der Anmeldung: 27.07.2011
(73) Patentinhaber: MAGNA STEYR Battery Systems GmbH & Co OG, 8141 Zettling (AT)
(72) Erfinder: MICHELITSCH, Martin, A-8041 Graz (AT); WÜNSCHE, Ralph, A-8041 Graz (AT)
(74) Vertreter: Rausch, Gabriele
(86) Internationale Anmeldenummer: PCT/EP2009/062719
(87) Internationale Veröffentlichungsnummer: WO 2010/037797

(56) Entgegenhaltungen:
- EP-A2- 1 753 058
- WO-A2-03/071616
- US-A- 5 585 204

## Beschreibung

Die vorliegende Erfindung betrifft eine Energiespeichereinheit zur Speicherung elektrischer Energie, die mehrere in einem Stapel angeordnete Flachzellen mit jeweiligen abstehenden Elektrodenlaschen umfasst.

Energiespeichereinheiten mit einem Stapel von Flachzellen (so genannte prismatische Zellen oder Pouch-Zellen) kommen beispielsweise bei elektrisch angetriebenen Kraftfahrzeugen zur Anwendung. Infolge der während des Betriebs auftretenden hohen Spannungen und Stromstärken können beträchtliche Wärmemengen entstehen, die abgeführt werden müssen, um eine Überhitzung der Energiespeichereinheit zu vermeiden. Die herkömmlicherweise zur Wärmeabfuhr eingesetzten Kühlvorrichtungen sind jedoch aufwändig und beanspruchen relativ viel Bauraum, der gerade im Bereich der Kraftfahrzeugtechnik sehr begrenzt ist.

Es ist daher eine Aufgabe der Erfindung, bei Energiespeichereinheiten der genannten Art auf möglichst effiziente und kompakte Weise eine Wärmeabfuhr bereitzustellen.

Diese Aufgabe wird durch eine Energiespeichereinheit mit den Merkmalen des Anspruchs 1 gelöst.

Erfindungsgemäß umfasst eine Energiespeichereinheit wenigstens einen Kühlkörper, der zumindest abschnittsweise mit den Flachzellen in wärmeleitender Verbindung steht, wobei der Kühlkörper zumindest bereichsweise aus Kunststoff besteht und Öffnungen aufweist, durch die sich die Elektrodenlaschen hindurch erstrecken.

Der Kühlkörper kann in den Flachzellen entstehende Verlustwärme abführen und somit die Zuverlässigkeit und Lebensdauer der Energiespeichereinheit erhöhen. Eine Ausführung aus Kunststoff ermöglicht eine einfache und kostengünstige Herstellung und ist darüberhinaus vorteilhaft hinsichtlich einer Gewichtsersparnis.

Bei den Öffnungen kann es sich insbesondere um Schlitze handeln, welche auf die Elektrodenform und -größe angepasst sind. Aufgrund der Öffnungen ist es möglich, den Kühlkörper auf der Elektrodenseite der Flachzellen anzuordnen und ihn dabei möglichst nahe an dem aktiven Zellenbereich zu platzieren, wodurch eine besonders effiziente Kühlung möglich ist. Da die Elektrodenlaschen durch die Öffnungen hindurchgeführt sind, ist darüber hinaus eine besonders Platz sparende Anordnung des Kühlkörpers möglich.

Je nach Anforderung kann ein einstückiger Kühlkörper vorgesehen sein oder es können mehrere Kühlkörper zu einer Kühlkörper-Anordnung zusammengefasst sein.

Weitere Ausführungsformen der Erfindung sind in den Unteransprüchen, der Beschreibung und den Zeichnungen angegeben.

Gemäß einer Ausführungsform besteht der Kühlkörper zumindest bereichsweise aus einem elektrisch isolierenden Material. Der Kühlkörper kann somit neben der Wärmeabfuhr auch eine Funktion der elektrischen Isolation erfüllen. Dadurch können entsprechende separate Isolierelemente entfallen, wodurch sowohl Kosten als auch Bauraum gespart werden.

Die Energiespeichereinheit kann eine Verbindungseinheit umfassen, welche die Flachzellen zumindest elektrisch miteinander verbindet, wobei der Kühlkörper zumindest abschnittsweise mit der Verbindungseinheit in wärmeleitender Verbindung steht. Eine derartige Verbindungseinheit umfasst üblicherweise Elemente zum seriellen und/oder parallelen Verschalten der einzelnen Flachzellen. Ferner kann die Verbindungseinheit verschiedene Anschluss- und Kontaktelemente zur elektrischen Kontaktierung der Flachzellen und zum Abgriff einer elektrischen Leistung umfassen. Diese elektrischen Verschaltungs- und Kontaktelemente erzeugen während des Betriebs der Energiespeichereinheit Joulesche Wärme (insbesondere bei Hochspannungsverbindungen), die ein Aufheizen der Bauteile der Verbindungseinheit zur Folge hat. Aufgrund des wärmeleitenden Kontakts zwischen der Verbindungseinheit und dem Kühlkörper kann diese Wärme zuverlässig abgeführt werden.

Der Kühlkörper kann gemäß einer vorteilhaften Ausgestaltung zwischen den Flachzellen und der Verbindungseinheit angeordnet sein. Die Energiespeichereinheit weist bei dieser Ausführungsform also einen sandwichartigen Aufbau auf, wobei die Flachzellen, der Kühlkörper und die Verbindungseinheit aufeinandergestapelt sind. Ermöglicht wird dieser Aufbau aufgrund der durch die Öffnungen des Kühlkörpers hindurchgeführten Elektroden. Der Kühlkörper ist somit in der Lage, sowohl von den Flachzellen ausgehende als auch in der Verbindungseinheit, also z.B. in Leiterbahnen, Kontakten oder Anschlusselementen, entstehende Abwärme aufzunehmen und abzuführen, wodurch die Lebensdauer der Energiespeichereinheit erhöht wird. Dadurch dass der Kühlkörper zwischen dem Flachzellenstapel und der Verbindungseinheit angeordnet ist, also in die Energiespeichereinheit integriert ist, ist eine besonders Bauraum sparende Ausführung der Wärmeabfuhr möglich. Ein weiterer Vorteil ergibt sich dadurch, dass der Kühlkörper zur Erhöhung der mechanischen Stabilität der Energiespeichereinheit genutzt werden kann.

Bevorzugt sind die Verbindungseinheit und/oder der Kühlkörper plattenartig ausgebildet und erstrecken sich in einer Ebene senkrecht zu der jeweiligen Erstreckungsebene der Flachzellen. Beispielsweise können die Verbindungseinheit und der Kühlkörper an einer Stirnseite des Flachzellenstapels angeordnet sein und diesen bedecken. Hierdurch wird insbesondere die wärmeleitende Anbindung des Kühlkörpers an alle Flachzellen des Stapels erleichtert.

Die Verbindungseinheit und der Kühlkörper können zumindest abschnittsweise flächig aneinander anliegen, um auf diese Weise einen effizienten Wärmeübertrag zwischen den beiden Bauteilen zu gewährleisten.

Gemäß einer weiteren Ausführungsform ist der Kühlkörper als Trägerelement für die Verbindungseinheit und/oder für ein Abdeckelement der Energiespeichereinheit ausgebildet. Der Kühlkörper erfüllt bei dieser Ausgestaltung eine vorteilhafte Zusatzfunktion, indem er die mechanische Stabilität der Gesamtanordnung erhöht.

Der Kühlkörper kann Befestigungselemente zum Befestigen der Verbindungseinheit und/oder eines Abdeckelements der Energiespeichereinheit umfassen, um so insbesondere die Montage zu erleichtern.

Gemäß einer Ausführungsform kann auch die Verbindungseinheit Öffnungen, insbesondere Schlitze, aufweisen, welche mit den Öffnungen des Kühlkörpers fluchten, und durch die sich die Elektroden hindurch erstrecken, wobei die Elektroden insbesondere auf der den Flachzellen abgewandten Seite der Verbindungseinheit mit der Verbindungseinheit verbunden sind. Um einen Kurzschluss zwischen zwei Elektroden zu vermeiden, können die Öffnungen von isolierendem Material umrandet sein. Beispielsweise können Isolierhülsen in die Öffnungen eingeführt sein. Im Bereich des Kühlkörpers kann eine derartige Maßnahme entfallen, wenn der Kühlkörper selbst aus nicht leitendem Material besteht.

Zwischen den Flachzellen können Kühlelemente angeordnet sein, welche mit den Flachzellen und mit dem Kühlkörper in wärmeleitender Verbindung stehen. Dadurch wird eine effizientere Kühlung der Flachzellen erzielt.

Die Kühlelemente können plattenförmig ausgebildet sein, wobei zwischen jedem Paar benachbarter Flachzellen eines der plattenförmigen Kühlelemente angeordnet ist. Insbesondere können die plattenförmigen Kühlelemente vollflächig an den jeweils benachbarten Flachzellen anliegen, um so eine gleichmäßige und effektive Wärmeabfuhr sicherzustellen.

Die Flachzellen können mit den Kühlelementen verklebt sein. Um einen optimalen Wärmeübergang von den Flachzellen auf die Kühlelemente zu ermöglichen, kann hierzu insbesondere ein wärmeleitender Klebstoff zur Anwendung kommen.

Gemäß einer vorteilhaften Ausführungsform sind die Kühlelemente in Ausnehmungen des Kühlkörpers eingesetzt und insbesondere mit dem Kühlkörper verklebt. Auf diese Weise wird die Montage erleichtert und gleichzeitig die mechanische Stabilität des Gesamtsystems erhöht, da die Kühlelemente mit dem Kühlkörper eine feste Einheit bilden.

Um einen ausreichenden Spielraum oder eine Reserve zum Ausgleich von Relativbewegungen zwischen dem Kühlkörper und dem Flachzellenstapel - beispielsweise aufgrund von thermischen Ausdehnungen - zu ermöglichen, können die Kühlelemente jeweils zumindest eine, insbesondere im Wesentlichen parallel zur Erstreckungsebene des Kühlkörpers verlaufende, Sicke aufweisen. Bei der Sicke kann es sich um eine Ausbuchtung handeln, die im Querschnitt C- oder S-förmig ist und die sich über die gesamte Länge des Kühlelements erstreckt.

Gemäß einer weiteren Ausführungsform ist jedem der Kühlelemente zumindest ein in dem Kühlkörper ausgebildeter, mit Kühlmittel durchströmbarer Hohlraum zugeordnet, welcher sich insbesondere parallel zu den Flachzellen erstreckt. Die Kühlleistung kann auf diese Weise beträchtlich gesteigert werden. Je nach Ausführungsform kann jedem Kühlelement ein separat gespeister Hohlraum zugeordnet sein oder die einzelnen Hohlräume können untereinander verbunden sein, sodass sich letztendlich ein durchgehender, beispielsweise mäanderförmiger Gesamthohlraum für die entsprechende Energiespeichereinheit ergibt. Der jeweilige Hohlraum kann auch dadurch gebildet sein, dass der Kühlkörper eine Vertiefung oder Ausnehmung aufweist, welche durch die Verbindungseinheit fluiddicht abgedeckt wird.

Der Hohlraum kann einen U-förmigen Querschnitt mit zwei in Richtung des zugeordneten Kühlelements weisenden Schenkelabschnitten aufweisen, wobei sich das Kühlelement in den Bereich zwischen den Schenkelabschnitten hinein erstreckt. Der von Kühlmittel durchströmbare Hohlraum umgreift also ein Ende des zugehörigen Kühlelements und ermöglicht so eine besonders effiziente Wärmeabfuhr von diesem. Je nach Anwendungsvorgabe könnten auch jedem Kühlelement mehrere Hohlräume zugeordnet sein.

Gemäß einer weiteren Ausführungsform weist die Energiespeichereinheit zumindest einen Kühlmittelkanal zum Speisen der Hohlräume mit Kühlmittel auf, der an einer ersten Stirnseite der Energiespeichereinheit in einen Kühlmitteleinlass mündet und an einer zweiten Stirnseite der Energiespeichereinheit in einen Kühlmittelauslass mündet. Alle zu der Energiespeichereinheit gehörenden Hohlräume können somit auf einfache Weise an eine gemeinsame Kühlmittelversorgung angeschlossen werden.

Der Kühlmitteleinlass/-auslass kann zum Anschluss an einen Kühlmittelauslass/-einlass einer weiteren Energiespeichereinheit ausgebildet sein. Mehrere Energiespeichereinheiten können somit im Rahmen eines modularen Konzepts zu einer Gesamt-Energiespeichereinheit (z.B. Fahrzeugbatterie) zusammengesetzt und an eine gemeinsame Kühlmittelversorgung angeschlossen werden, wobei jeweils der Kühlmittelauslass einer Energiespeichereinheit mit dem Kühlmitteleinlass der nachfolgenden Energiespeichereinheit verbunden wird, sodass im Endeffekt alle Hohlräume von dem zugeführten Kühlmittel durchströmt werden.

Nach einer besonderen Ausführungsform der Erfindung ist diese nicht nur zur Anwendung bei Lithium-Ionen-Akkumulatoren/Zellen geeignet, sondern kann auch für/bei andere/n Energiespeicher, beispielsweise NiMH (Nickel-Metallhydrid)-Energiespeicher/Zellen und/oder Kondensator-Speicherzellen, insbesondere Doppelschicht-Kondensator-Zellen (Supercaps) verwendet werden.

Nachfolgend wird die vorliegende Erfindung beispielhaft anhand von vorteilhaften Ausführungsformen unter Bezugnahme auf die beigefügten Zeichnungen erläutert.
- Fig. 1: ist eine Perspektivansicht zweier erfindungsgemäßer Energiespeichereinheiten.
- Fig. 2: ist eine Querschnittansicht eines Teils einer der Energiespeichereinheiten gemäß Fig. 1.

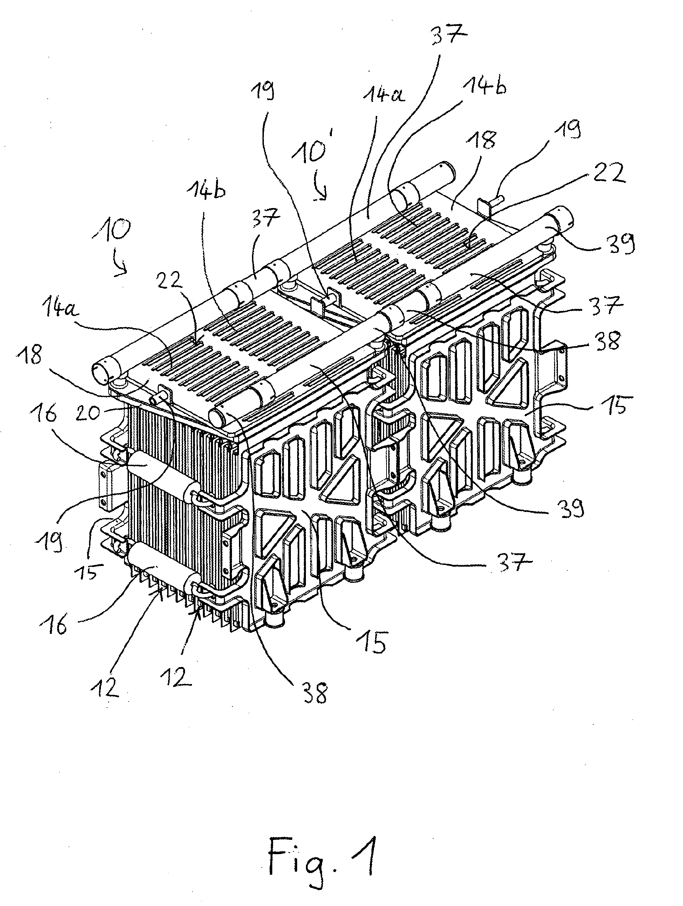

Fig. 1 zeigt zwei Energiespeichereinheiten 10, 10' in einer Perspektivansicht. Die beiden Energiespeichereinheiten 10, 10' sind aneinandergefügt, um eine übergeordnete Einheit zu bilden. Im Rahmen eines Modulkonzepts können somit je nach Anwendungsvorgabe beliebig viele Energiespeichereinheiten in einer Reihe aneinandergefügt werden oder auch zu einer zwei- oder dreidimensionalen Matrix zusammengestellt werden, um letztlich beispielsweise eine Fahrzeugbatterie zu bilden.

Jede der Energiespeichereinheiten 10, 10' umfasst eine Mehrzahl von prismatischen Zellen/Flachzellen 12, die in einem Stapel parallel zueinander angeordnet sind. Die Zellen 12 können beispielsweise Lithium-Ionen-Akkumulator-Zellen oder Doppelschicht-Kondensator-Zellen ("Supercap") sein. Die einzelnen Zellen 12 weisen jeweils zwei schmalseitig abstehende Elektrodenlaschen 14a, 14b auf. Eine plattenförmige Verbindungsplatine 18 dient zur elektrischen Durchkontaktierung der Zellen 12. Die Zellen 12 sind bei dem beschriebenen Ausführungsbeispiel seriell verschaltet. Je nach Anforderungsprofil kann auch eine beliebige andere Verschaltung der Zellen 12 gewählt werden, zum Beispiel eine parallele Verschaltung oder eine Mischform zwischen serieller und paralleler Verschaltung. Die Zellen 12 des jeweiligen Stapels sind mittels zweier Druckplatten 15 sowie Zugfedern 16 gegeneinander verspannt. Dies schafft einen festen Halt, ermöglicht aber gleichzeitig ein "Atmen" der Zellen 12, z.B. aufgrund von thermischer Ausdehnung.

Die in den Zellen 12 gespeicherte elektrische Energie kann über Stecker 19 abgegriffen werden, welche an gegenüberliegenden Seiten der Verbindungsplatine 18 angeordnet sind. Die Verbindungsplatine 18 ist rechtwinklig zu den Zellen 12 ausgerichtet und bedeckt eine Stirnseite des Zellenstapels vollständig.

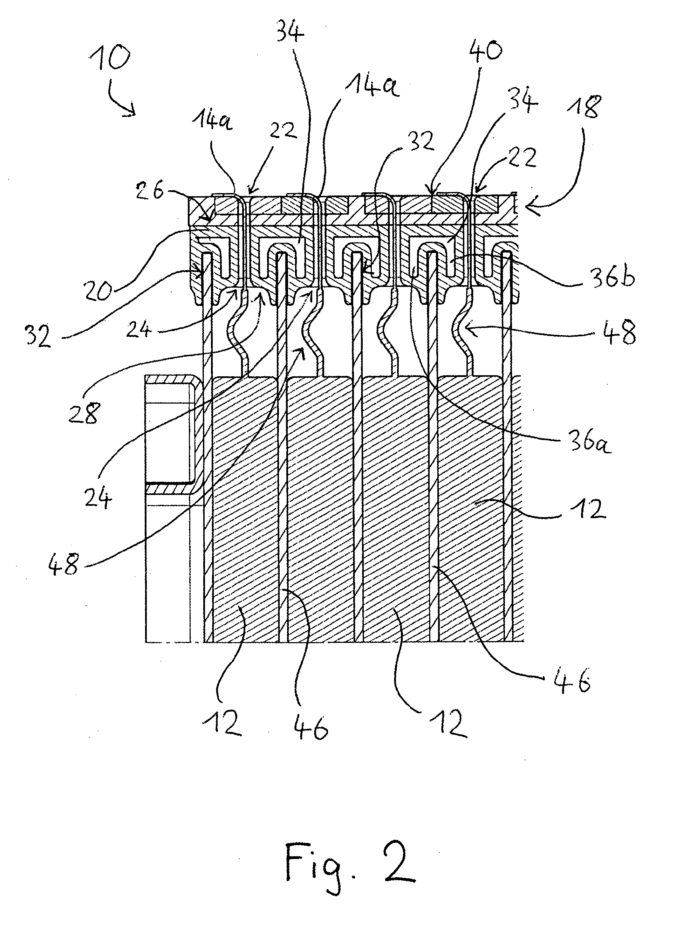

Wie aus der Schnittansicht von Fig. 2 hervorgeht, ist zwischen der Verbindungsplatine 18 und den Flachzellen 12 ein plattenförmiger Kühlkörper 20 aus Kunststoff angeordnet, welcher im Wesentlichen die gleiche flächige Erstreckung aufweist wie die Verbindungsplatine 18. Die Verbindungsplatine 18 weist Schlitze 22 zum Durchführen der Elektrodenlaschen 14a, 14b auf. Ebenso weist der Kühlkörper 20 Schlitze 24 auf, welche deckungsgleich mit den Schlitzen 22 der Verbindungsplatine 18 sind und mit diesen fluchten. Die Elektrodenlaschen 14a, 14b sind durch die Schlitze 24 des Kühlkörpers 20 und durch die Schlitze 22 der Verbindungsplatine 18 hindurchgeführt und an ihrem oberen Ende umgebogen. Weiterhin sind die Elektrodenlaschen 14a, 14b mit Kontaktelementen 40 elektrisch leitend verbunden, vorzugsweise verschweißt. Die Kontaktelemente 40 weisen Bimetallstrukturen auf, um eine Verringerung von Korrosion zu gewährleisten.

Der Kühlkörper 20 ist bei der dargestellten Ausführungsform einstückig ausgebildet und bildet einen Träger für die Verbindungsplatine 18, welche mittels nicht dargestellter Befestigungselemente, wie Druckdomen und Federringen, derart an der Oberseite 26 des Kühlkörpers 20 angebracht ist, dass sie diesen dauerhaft und vollflächig kontaktiert. Der Kühlkörper 20 steht somit in wärmeleitender Verbindung mit der Verbindungsplatine 18, d.h. Wärme, die im Bereich der Kontaktelemente 40 entsteht, kann effizient auf den Kühlkörper 20 übertragen werden.

Insgesamt bildet der Kühlkörper 20 eine Barriere zwischen den Abwärme produzierenden Zellen 12 und den aufgrund des Stromflusses ebenfalls Abwärme abgebenden Kontaktelementen 40. Dieser Aufbau ermöglicht eine besonders effiziente Abwärmeabfuhr.

Fig. 2 lässt erkennen, dass zwischen benachbarten Zellen 12 plattenförmige Kühlelemente 46 vorgesehen sind, die zur Kühlung der Zellen 12 dienen und zusätzlich als Distanzhalter fungieren können. Sie sind bevorzugt derart ausgebildet, dass sie ein "Atmen" der Zellen 12 bei Ladungs- bzw. Entladungsvorgängen und Abmessungsänderungen während der Lebensdauer der Zellen 12 aufnehmen/kompensieren können. Zur Stabilisierung des Gesamtaufbaus und zur besseren Wärmeleitung können die Kühlelemente 46 im Wesentlichen vollflächig mit den jeweils benachbarten Zellen 12 verklebt sein.

Der Kühlkörper 20 weist an seiner den Zellen 12 zugewandten Unterseite 28 Ausnehmungen 32 auf, in welche die Kühlelemente 46 eingesteckt und verklebt sind.

Wie Fig. 2 weiter zu entnehmen ist, sind in dem Kühlkörper 20 Hohlräume 34 ausgebildet, durch welche ein Kühlmittel hindurchströmen kann, um so die Kühlleistung zu erhöhen. Jedem der Kühlelemente 46 ist ein eigener Hohlraum 34 zugeordnet, welcher sich parallel zu den Zellen 12 und somit auch parallel zu dem zugehörigen Kühlelement 46 erstreckt. Die Hohlräume 34 weisen einen U-förmigen Querschnitt mit zwei in Richtung des jeweiligen Kühlelements 46 weisenden Schenkelabschnitten 36a, 36b auf und sind derart angeordnet, dass sie das obere Ende des entsprechenden Kühlelements 46 umgreifen.

Die Hohlräume 34 sind derart untereinander verbunden, dass sich ein serieller Durchfluss von Kühlmittel durch alle Hohlräume 34 ergibt. Das Kühlmittel wird über rohrförmige Kühlmittelkanäle 37 (Fig. 1) zu- und wieder abgeführt. Für jede Energiespeichereinheit 10, 10' sind zwei Kühlmittelkanäle 37 vorgesehen, welche an der den Zellen 12 abgewandten Seite der Verbindungsplatine 18 angeordnet sind und von der Oberseite 26 des Kühlkörpers 20 aus mit den Hohlräumen 34 kommunizieren. Die Kühlmittelkanäle 37 sind bei dem dargestellten Beispiel parallel zu den Zellen 12 ausgerichtet und befinden sich jeweils an einem äußeren Randbereich der Verbindungsplatine 18. Alternativ könnten die Kühlmittelkanäle 37 auch rechtwinklig zu den Zellen 12 ausgerichtet sein. Jeder Kühlmittelkanal 37 weist an einem Ende einen Kühlmitteleinlass 38 und am entgegengesetzten Ende einen Kühlmittelauslass 39 auf. Die Ausgestaltung ist derart, dass der Kühlmittelauslass 39 einer Energiespeichereinheit 10' in den Kühlmitteleinlass 38 einer anderen Energiespeichereinheit 10 einsteckbar ist.

Während des Betriebs der Energiespeichereinheit 10, 10' treten einerseits durch die produzierte Abwärme thermische Spannungen auf, andererseits "atmen" die Zellen 12 aufgrund der Ladungs- bzw. Entladungsvorgänge. Um die damit verbundenen Bewegungen der Zellen 12 relativ zu der Verbindungsplatine 18 in vertikaler und/oder horizontaler Richtung zu kompensieren, weisen die Elektrodenlaschen 14a, 14b Sicken 48 auf, die in einem Querschnitt zu einer C-förmigen Ausbuchtung eines Abschnitts der jeweiligen Elektrodenlasche 14a, 14b führen. Sollte die Anwendung dies erfordern, können auch die Kühlelemente 46 entsprechende Sicken aufweisen.

### Bezugszeichenliste

- 10, 10': Energiespeichereinheit
- 12: Zelle
- 14a, 14b: Elektrodenlasche
- 15: Druckplatte
- 16: Zugfeder
- 18: Verbindungsplatine
- 19: Stecker
- 20: Kühlkörper
- 22: Schlitz
- 24: Schlitz
- 26: Oberseite
- 28: Unterseite
- 32: Ausnehmung
- 34: Hohlraum
- 36a, 36b: Schenkelabschnitt
- 37: Kühlmittelkanal
- 38: Kühlmitteleinlass
- 39: Kühlmittelauslass
- 40: Kontaktelement
- 46: Kühlelement
- 48: Sicke

## Patentansprüche

1. Energiespeichereinheit (10, 10') zur Speicherung elektrischer Energie, die mehrere in einem Stapel angeordnete Flachzellen (12) mit jeweiligen abstehenden Elektrodenlaschen (14a, 14b) umfasst; **dadurch gekennzeichnet,**
**dass** die Energiespeichereinheit (10, 10') wenigstens einen Kühlkörper (20) umfasst, der zumindest abschnittsweise mit den Flachzellen (12) in wärmeleitender Verbindung steht, wobei der Kühlkörper (20) zumindest bereichsweise aus Kunststoff besteht und Öffnungen (24) aufweist, durch die sich die Elektrodenlaschen (14a, 14b) hindurch erstrecken.

2. Energiespeichereinheit nach Anspruch 1,
**dadurch gekennzeichnet,**
**dass** der Kühlkörper (20) zumindest bereichsweise aus einem elektrisch isolierenden Material besteht.

3. Energiespeichereinheit nach Anspruch 1 oder 2,
**dadurch gekennzeichnet,**
**dass** die Energiespeichereinheit (10, 10') eine Verbindungseinheit (18) umfasst, welche die Flachzellen (12) zumindest elektrisch miteinander verbindet, wobei der Kühlkörper (20) zumindest abschnittsweise mit der Verbindungseinheit (18) in wärmeleitender Verbindung steht.

4. Energiespeichereinheit nach Anspruch 3,
**dadurch gekennzeichnet,**
**dass** der Kühlkörper (20) zwischen den Flachzellen (12) und der Verbindungseinheit (18) angeordnet ist.

5. Energiespeichereinheit nach Anspruch 3 oder 4,
**dadurch gekennzeichnet,**
**dass** die Verbindungseinheit (18) und/oder der Kühlkörper (20) plattenartig ausgebildet sind und sich in einer Ebene senkrecht zu der jeweiligen Erstreckungsebene der Flachzellen (12) erstrecken.

6. Energiespeichereinheit nach einem der Ansprüche 3 bis 5,
**dadurch gekennzeichnet,**
**dass** die Verbindungseinheit (18) und der Kühlkörper (20) zumindest abschnittsweise flächig aneinander anliegen.

7. Energiespeichereinheit nach einem der Ansprüche 3 bis 6,
**dadurch gekennzeichnet,**
**dass** der Kühlkörper (20) als Trägerelement für die Verbindungseinheit (18) und/oder für ein Abdeckelement der Energiespeichereinheit (10, 10') ausgebildet ist.

8. Energiespeichereinheit nach einem der Ansprüche 3 bis 7,
**dadurch gekennzeichnet,**
**dass** der Kühlkörper (20) Befestigungselemente zum Befestigen der Verbindungseinheit (18) und/oder eines Abdeckelements der Energiespeichereinheit (10, 10') umfasst.

9. Energiespeichereinheit nach einem der Ansprüche 3 bis 8,
**dadurch gekennzeichnet,**
**dass** die Verbindungseinheit (18) Öffnungen (22), insbesondere Schlitze, aufweist, welche mit den Öffnungen (24) des Kühlkörpers (20) fluchten, und durch die sich die Elektrodenlaschen (14a, 14b) hindurch erstrecken, wobei die Elektrodenlaschen (14a, 14b) insbesondere auf der den Flachzellen (12) abgewandten Seite der Verbindungseinheit (18) mit der Verbindungseinheit (18) verbunden sind.

10. Energiespeichereinheit nach einem der vorstehenden Ansprüche,
**dadurch gekennzeichnet,**
**dass** zwischen den Flachzellen (12) Kühlelemente (46) angeordnet sind, welche mit den Flachzellen (12) und mit dem Kühlkörper (20) in wärmeleitender Verbindung stehen.

11. Energiespeichereinheit nach Anspruch 10,
**dadurch gekennzeichnet,**
**dass** die Kühlelemente (46) plattenförmig ausgebildet sind und zwischen jedem Paar benachbarter Flachzellen (12) ein Kühlelement (46) angeordnet ist.

12. Energiespeichereinheit nach Anspruch 10 oder 11,
**dadurch gekennzeichnet,**
**dass** die Flachzellen (12) mit den Kühlelementen (46) verklebt sind.

13. Energiespeichereinheit nach einem der Ansprüche 10 bis 12,
**dadurch gekennzeichnet,**
**dass** die Kühlelemente (46) in Ausnehmungen (32) des Kühlkörpers (20) eingesetzt und insbesondere mit dem Kühlkörper (20) verklebt sind.

14. Energiespeichereinheit nach einem der Ansprüche 10 bis 13,
**dadurch gekennzeichnet,**
**dass** die Kühlelemente (46) jeweils zumindest eine, insbesondere im Wesentlichen parallel zur Erstreckungsebene des Kühlkörpers (20) verlaufende, Sicke aufweisen.

15. Energiespeichereinheit nach einem der Ansprüche 10 bis 14,
**dadurch gekennzeichnet,**
**dass** jedem der Kühlelemente (46) zumindest ein in dem Kühlkörper (20) ausgebildeter, mit Kühlmittel durchströmbarer Hohlraum (34) zugeordnet ist, welcher sich insbesondere parallel zu den Flachzellen (12) erstreckt.

16. Energiespeichereinheit nach Anspruch 15,
**dadurch gekennzeichnet,**
**dass** der Hohlraum (34) einen U-förmigen Querschnitt mit zwei in Richtung des zugeordneten Kühlelements (46) weisenden Schenkelabschnitten (36a, 36b) aufweist, wobei sich das Kühlelement (46) in den Bereich zwischen den Schenkelabschnitten (36a, 36b) hinein erstreckt.

17. Energiespeichereinheit nach Anspruch 15 oder 16,
**dadurch gekennzeichnet,**
**dass** die Energiespeichereinheit (10, 10') zumindest einen Kühlmittelkanal (37) zum Speisen der Hohlräume (34) mit Kühlmittel aufweist, der an einer ersten Stirnseite der Energiespeichereinheit (10, 10') in einen Kühlmitteleinlass (38) mündet und an einer zweiten Stirnseite der Energiespeichereinheit (10, 10') in einen Kühlmittelauslass (39) mündet.

18. Energiespeichereinheit nach Anspruch 17,
**dadurch gekennzeichnet,**
**dass** der Kühlmitteleinlass/-auslass (38, 39) zum Anschluss an einen Kühlmittelauslass/-einlass (39, 38) einer weiteren Energiespeichereinheit (10, 10') ausgebildet ist.

## Claims

1. Energy storage unit (10, 10') for storing electrical energy, which energy storage unit (10, 10') comprises a plurality of flat cells (12) which are arranged in a stack with respective projecting electrode plates (14a, 14b);
**characterized in that** the energy storage unit (10, 10') comprises at least one heat sink (20) which is in a thermally conducting connection at least in sections with the flat cells (12), the heat sink (20) being composed of plastic at least in regions and having openings (24), through which the electrode plates (14a, 14b) extend.

2. Energy storage unit according to Claim 1, **characterized in that** the heat sink (20) is composed of an electrically insulating material at least in regions.

3. Energy storage unit according to Claim 1 or 2, **characterized in that** the energy storage unit (10, 10') comprises a connecting unit (18) which connects the flat cells (12) to one another at least electrically, the heat sink (20) being in a thermally conducting connection at least in sections with the connecting unit (18).

4. Energy storage unit according to Claim 3, **characterized in that** the heat sink (20) is arranged between the flat cells (12) and the connecting unit (18).

5. Energy storage unit according to Claim 3 or 4, **characterized in that** the connecting unit (18) and/or the heat sink (20) are/is of plate-like configuration and extend/extends in a plane perpendicularly with respect to the respective plane of extent of the flat cells (12).

6. Energy storage unit according to one of Claims 3 to 5, **characterized in that** the connecting unit (18) and the heat sink (20) bear flatly against one another at least in sections.

7. Energy storage unit according to one of Claims 3 to 6, **characterized in that** the heat sink (20) is configured as a carrier element for the connecting unit (18) and/or for a covering element of the energy storage unit (10, 10').

8. Energy storage unit according to one of Claims 3 to 7, **characterized in that** the heat sink (20) comprises fastening elements for fastening the connecting unit (18) and/or a covering element of the energy storage unit (10, 10').

9. Energy storage unit according to one of Claims 3 to 8, **characterized in that** the connecting unit (18) has openings (22), in particular slots, which are aligned with the openings (24) of the heat sink (20) and through which the electrode plates (14a, 14b) extend, the electrode plates (14a, 14b) being connected to the connecting unit (18), in particular, on that side of the connecting unit (18) which faces away from the flat cells (12).

10. Energy storage unit according to one of the preceding claims, **characterized in that** cooling elements (46) which are in a thermally conducting connection with the flat cells (12) and with the heat sink (20) are arranged between the flat cells (12).

11. Energy storage unit according to Claim 10, **characterized in that** the cooling elements (46) are of plate-shaped configuration and a cooling element (46) is arranged between each pair of adjacent flat cells (12).

12. Energy storage unit according to Claim 10 or 11, **characterized in that** the flat cells (12) are adhesively bonded to the cooling elements (46).

13. Energy storage unit according to one of Claims 10 to 12, **characterized in that** the cooling elements (46) are inserted into recesses (32) of the heat sink (20) and, in particular, are adhesively bonded to the heat sink (20).

14. Energy storage unit according to one of Claims 10 to 13, **characterized in that** the cooling elements (46) in each case have at least one bead which, in particular, runs substantially parallel to the plane of extent of the heat sink (20).

15. Energy storage unit according to one of Claims 10 to 14, **characterized in that** each of the cooling elements (46) is assigned at least one cavity (34) which is formed in the heat sink (20), through which coolant can flow, and which extends, in particular, parallel to the flat cells (12).

16. Energy storage unit according to Claim 15, **characterized in that** the cavity (34) has a U-shaped cross section with two limb sections (36a, 36b) which point in the direction of the associated cooling element (46), the cooling element (46) extending into the region between the limb sections (36a, 36b).

17. Energy storage unit according to Claim 15 or 16, **characterized in that** the energy storage unit (10, 10') has at least one coolant channel (37) for feeding the cavities (34) with coolant, which coolant channel (37) opens into a coolant inlet (38) on a first end side of the energy storage unit (10, 10') and opens into a coolant outlet (39) on a second end side of the energy storage unit (10, 10').

18. Energy storage unit according to Claim 17, **characterized in that** the coolant inlet/outlet (38, 39) is configured for connection to a coolant outlet/inlet (39, 38) of a further energy storage unit (10, 10').

## Revendications

1. Unité d'accumulation d'énergie (10, 10') pour l'accumulation d'énergie électrique, qui comprend plusieurs cellules plates (12) empilées avec des langues d'électrodes saillantes respectives (14a, 14b) ;
**caractérisée en ce que**
l'unité d'accumulation d'énergie (10, 10') comprend au moins un corps de refroidissement (20) qui est au moins en partie en liaison thermoconductrice avec les cellules plates (12), le corps de refroidissement (20) se composant au moins en partie de plastique et présentant des ouvertures (24) à travers lesquelles s'étendent les langues d'électrodes (14a, 14b).

2. Unité d'accumulation d'énergie selon la revendication 1,
**caractérisée en ce que**
le corps de refroidissement (20) se compose au moins en partie d'un matériau électriquement isolant.

3. Unité d'accumulation d'énergie selon la revendication 1 ou 2,
**caractérisée en ce que**
l'unité d'accumulation d'énergie (10, 10') comprend une unité de liaison (18) qui relie les unes aux autres au moins électriquement les cellules plates (12), le corps de refroidissement (20) étant au moins en partie en liaison thermoconductrice avec l'unité de liaison (18).

4. Unité d'accumulation d'énergie selon la revendication 3,
**caractérisée en ce que**
le corps de refroidissement (20) est disposé entre les cellules plates (12) et l'unité de liaison (18).

5. Unité d'accumulation d'énergie selon la revendication 3 ou 4,
**caractérisée en ce que**
l'unité de liaison (18) et/ou le corps de refroidissement (20) sont réalisés en forme de plaque et s'étendent dans un plan perpendiculairement au plan d'étendue respectif des cellules plates (12).

6. Unité d'accumulation d'énergie selon l'une quelconque des revendications 3 à 5,
**caractérisée en ce que**
l'unité de liaison (18) et le corps de refroidissement (20) s'appliquent au moins en partie à plat l'un contre l'autre.

7. Unité d'accumulation d'énergie selon l'une quelconque des revendications 3 à 6,
**caractérisée en ce que**
le corps de refroidissement (20) est réalisé sous forme d'élément de support pour l'unité de liaison (18) et/ou pour un élément de recouvrement de l'unité d'accumulation d'énergie (10, 10').

8. Unité d'accumulation d'énergie selon l'une quelconque des revendications 3 à 7,
**caractérisée en ce que**
le corps de refroidissement (20) comprend des éléments de fixation pour la fixation de l'unité de liaison (18) et/ou d'un élément de recouvrement de l'unité d'accumulation d'énergie (10, 10').

9. Unité d'accumulation d'énergie selon l'une quelconque des revendications 3 à 8,
**caractérisée en ce que**
l'unité de liaison (18) présente des ouvertures (22), en particulier des fentes, qui sont en affleurement avec les ouvertures (24) du corps de refroidissement (20), et à travers lesquelles s'étendent les langues d'électrodes (14a, 14b), les langues d'électrodes (14a, 14b) étant connectées à l'unité de liaison (18), en particulier du côté de l'unité de liaison (18) opposé aux cellules plates (12).

10. Unité d'accumulation d'énergie selon l'une quelconque des revendications précédentes,
**caractérisée en ce que**
des éléments de refroidissement (46) sont disposés entre les cellules plates (12), lesquels éléments de refroidissement sont en liaison thermoconductrice avec les cellules plates (12) et avec le corps de refroidissement (20).

11. Unité d'accumulation d'énergie selon la revendication 10,
**caractérisée en ce que**
les éléments de refroidissement (46) sont réalisés sous forme de plaques et entre chaque paire de cellules plates adjacentes (12) est disposé un élément de refroidissement (46).

12. Unité d'accumulation d'énergie selon la revendication 10 ou 11,
**caractérisée en ce que**
les cellules plates (12) sont collées aux éléments de refroidissement (46).

13. Unité d'accumulation d'énergie selon l'une quelconque des revendications 10 à 12,
**caractérisée en ce que**
les éléments de refroidissement (46) sont insérés dans des évidements (32) du corps de refroidissement (20) et sont notamment collés au corps de refroidissement (20).

14. Unité d'accumulation d'énergie selon l'une quelconque des revendications 10 à 13,
**caractérisée en ce que**
les éléments de refroidissement (46) présentent à chaque fois au moins une moulure, en particulier s'étendant essentiellement parallèlement au plan d'étendue du corps de refroidissement (20).

15. Unité d'accumulation d'énergie selon l'une quelconque des revendications 10 à 14,
**caractérisée en ce que**
l'on associe à chacun des éléments de refroidissement (46) au moins une cavité (34) réalisée dans le corps de refroidissement (20) et pouvant être parcourue par un fluide de refroidissement, laquelle s'étend notamment parallèlement aux cellules plates (12).

16. Unité d'accumulation d'énergie selon la revendication 15,
**caractérisée en ce que**
la cavité(34) présente une section transversale en forme de U avec deux sections de branches (36a, 36b) orientées dans la direction de l'élément de refroidissement associé (46), l'élément de refroidissement (46) s'étendant dans la région entre les sections de branches (36a, 36b).

17. Unité d'accumulation d'énergie selon la revendication 15 ou 16,
**caractérisée en ce que**
l'unité d'accumulation d'énergie (10, 10') présente au moins un canal de fluide de refroidissement (37) pour alimenter les cavités (34) en fluide de refroidissement, lequel canal de fluide de refroidissement débouche au niveau d'un premier côté frontal de l'unité d'accumulation d'énergie (10, 10') dans une entrée de fluide de refroidissement (38) et débouche, au niveau d'un deuxième côté frontal de l'unité d'accumulation d'énergie (10, 10'), dans une sortie de fluide de refroidissement (39).

18. Unité d'accumulation d'énergie selon la revendication 17,
**caractérisée en ce que**
l'entrée/la sortie de fluide de refroidissement (38, 39) est réalisée de manière à se raccorder à une sortie/entrée de fluide de refroidissement (39, 38) d'une autre unité d'accumulation d'énergie (10, 10').
